(19) Europäisches Patentamt
European Patent Office
Office européen des brevets

(11) Veröffentlichungsnummer: **0 208 187**
**B1**

(12) **EUROPÄISCHE PATENTSCHRIFT**

(45) Veröffentlichungstag der Patentschrift: **07.11.90**

(51) Int. Cl.$^5$: **C 08 F 291/02,** C 08 L 77/00

(21) Anmeldenummer: **86108515.7**

(22) Anmeldetag: **23.06.86**

# (54) Neue Pfropfpolymerisate und deren Abmischungen mit Polyamiden.

(30) Priorität: **06.07.85 DE 3524234**

(43) Veröffentlichungstag der Anmeldung:
**14.01.87 Patentblatt 87/03**

(45) Bekanntmachung des Hinweises auf die Patenterteilung:
**07.11.90 Patentblatt 90/45**

(84) Benannte Vertragsstaaten:
**DE FR GB IT NL SE**

(56) Entgegenhaltungen:
**EP-A-0 001 245**
**EP-A-0 188 690**
**EP-A-0 223 005**

(73) Patentinhaber: **BAYER AG**
**D-5090 Leverkusen 1 Bayerwerk (DE)**

(72) Erfinder: **Lindner, Christian, Dr.**
**Riehler Str. 200**
**D-5000 Köln 60 (DE)**
Erfinder: **Wittmann, Dieter, Dr.**
**Doerperhofstr. 15**
**D-4150 Krefeld (DE)**
Erfinder: **Trabert, Ludwig, Dr.**
**Leydelstr. 67**
**D-4150 Krefeld (DE)**
Erfinder: **Süling, Carlhans, Dr.**
**Carl Leverkus-Str. 10**
**D-5068 Odenthal (DE)**
Erfinder: **Bartl, Herbert, Dr.**
**Eichendorffweg 10**
**D-5068 Odenthal (DE)**
Erfinder: **Ott, Karl-Heinz, Dr.**
**Paul Klee-Str. 54**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 208 187 B1

**Beschreibung**

Die Erfindung betrifft neue Pfropfpolymerisate auf der Basis von Elastomeren als Pfropfgrundlage und aufgepfropften Vinylmonomeren, deren Herstellung und Abmischungen mit speziellen thermoplastischen Kunststoffen.

Formmassen aus Polyamiden und Pfropfprodukten auf Butadien-Elastomeren und Mischungen aus (Meth)acrylestern und gegebenenfalls (Meth)acrylamid und (Meth)Acrylnitril sind in der E—A—1245 beschrieben. In der älteren EP—A—188 690 der Anmelderin werden Formmassen mit weiteren Pfropfmonomeren beschrieben.

Die neuen Pfropfcopolymerisate sind hergestellt aus

1. einer Elastomerkomponente mit Glasübergangstemperaturen <0°C, insbesonder <−20°C, als Pfropfgrundlage und

2. Pfropfmonomeren der allgemeinen Formel I

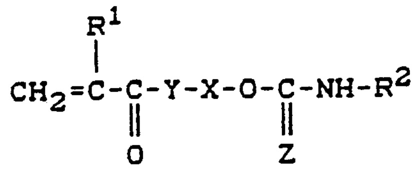

(I),

in der

$R^1$ für H oder einen $C_1$—$C_4$-Alkylrest, vorzugsweise H oder $CH_3$,

$R^2$ für einen $C_1$—$C_{20}$-Alkyl- oder einen $C_6$—$C_{18}$-Arylrest, der gegebenenfalls mit Alkylgruppen oder O- oder N-haltigen Gruppen substituiert sein kann,

Y für eine —O— oder eine —NH-Gruppe, vorzugsweise —O—

X für einen $C_2$—$C_{10}$-Alkylenrest, vorzugsweise einen $C_2$—$C_6$-Alkylenrest und

Z für O oder S, vorzugsweise O,

steht und deren Abmischungen mit Polyamiden.

Besonders geeignete Pfropfmonomere der allgemeinen Formel (I) sind Additionsproduke aus Hydroxyalkylestern von Acrylsäure oder Methacrylsäure und Monoisocyanaten, wie z.B.

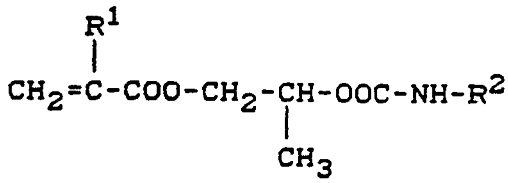

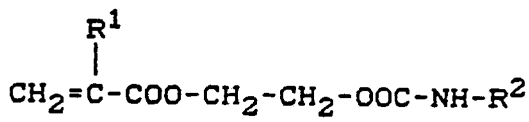

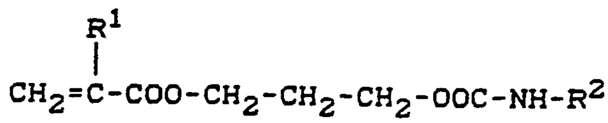

Besonders bevorzugte Verbindungen (I) sind solche, die im Molekül Urethangruppen aufweisen, die sich von einem aliphatischen Monoisocyanat ableiten, wie z.B. Additionsprodukte aus Hydroxyalkylestern von (Meth)-Acrylsäure und Alkylisocyanaten, insbesondere auf der Basis von Ethyl-, Propyl-, Cyclohexylisocyanat, Stearylisocyanat oder tert.-Butylisocyanat.

Bevorzugte Pfropfpolymerisate werden aus

8 bis 85 Gew.-%, vorzugsweise 50 bis 75 Gew.-% der Pfropfgrundlage und

92 bis 15 Gew.-%, vorzugsweise 50 bis 25 Gew.-% aufzupfropfenden Monomeren hergestellt, die aus 0,5 bis 100 Gew.-%, vorzugsweise 0,5 bis 20 Gew.-% aus Monomeren der allgemeinen Formel (I) und 0 bis 99,5 Gew.-%, vorzugsweise 99,5 bis 80 Gew.-% weiteren olefinisch ungesättigten Monomeren bestehen.

Die zur Pfropfcopolymerisation in Mischung mit wenigstens einem Monomeren (I) gegebenenfalls einsetzbaren olefinisch einfach ungesättigten Monomeren sind solche, die radikalisch polymerisierbar und zur Copolymerisation mit den Monomeren der Formel (I) fähig sind. Bevorzugt werden Vinyl- oder Vinylidenmonomere, besonders bevorzugt Monomere aus der Klasse der Styrole, wie Styrol, α-Methylstyrol, p-Methylstyrol, Halogenstyrole, α,β-ungesättigten Nitrile, wie Acrylnitril oder Methacrylnitril, Acrylate, wie Acrylsäurealkylester mit bis zu 12 C-Atomen in der Estergruppe sowie die entsprechenden

Methacrylate; Methacrylsäure, Acrylsäure, Acrylamid, Methacrylamid, Vinylacetat, Vinylpropionat, α-Olefine wie Ethylen, Propylen, Butadien, Chloropren, Vinylchlorid sowie auch Maleinsäurederivate wie Maleinsäureanhydrid eingesetzt.

Die in den erfindungsgemäßen Pfropfcopolymerisaten vorliegenden Elastomerkomponenten sind Elastomere mit Glasübergangstemperaturen <0°C, insbesondere <20°C, wie z.B. Elastomere aus der Reihe der Dienkautschuke, vorzugsweise Polybutadien, Polychloropren, Polyisopren, der Olefinkautschuke wie z.B. Ethylenpolymere, Ethylen-Vinylacetatcopolymere, Ethylen-Acrylat-Copolymere, EPDM-Kautschuke, der Silikonkautschuke oder Acrylatkautschuke, vorzugsweise Homo- oder Copolymere von Acrylsäurealkylestern mit bis zu 12 C-Atomen in der Estergruppe, die zur möglichen Vernetzung mit polyfunktionellen ungesättigten Monomeren copolymerisiert werden können. Bevorzugte Kautschukkomponenten sind Polybutadiene sowie deren Copolymere mit Styrol oder Acrylnitril, sowie Acrylatkautschuke. Die Elastomeren können unvernetzt, teilvernetzt oder hochvernetzt vorliegen. Besonders bevorzugt sind wenigstens bis zu 20%, insbesondere 50%, teilvernetzte Elastomere.

Besonders bevorzugt sind Elastomere, die eine durchschnittliche Teilchengröße von 0,05 bis 8 µm ($d_{50}$-Wert) vorzugsweise von 0,08 bis 1 µm aufweisen. Die Teilchengröße wird bestimmt durch Ultrazentrifugenmessung.

Insbesonders geeignete Kautschuke sind Polybutadiene oder deren Copolymerisate mit Teilchengrößen von 0,09 bis 0,6 µm und Gelgehalten >50 Gew.-% sowie Alkylacrylatkautschuke mit Teilchengrößen von 0,09 bis 0,6 µm und Gelgehalten >20 Gew.-%, vorzugsweise >80 Gew.-%; letztere sind dann besonders vorteilhaft, wenn sie eine sogenannte Kern-Mantel-Struktur aufweisen, d.h. sie enthalten einen Kern aus acrylatkautschukfremdem Polymerisat. Dieser Kern ist von einer Hülle aus vernetztem Alkylacrylatkautschuk umgeben, auf die dann die Monomeren (I), gegebenenfalls in Kombination mit anderen Monomeren, aufgepfropft werden.

Bevorzugte erfindungsgemäße Pfropfcopolymerisate besitzen eine teilchenförmige Gestalt mit einer Teilchengröße ($d_{50}$) von 0,05 bis 8 µm, sind wenigstens partiell vernetzt und leiten sich von Dien- oder den oben genannten Alkylacrylatkautschuken ab.

Die erfindungsgemäßen Pfropfpolymerisate werden hergestellt, indem wenigstens ein Monomer (I), gegebenenfalls in Kombination mit anderen ethylenisch ungesättigten Monomeren, radikalisch in Gegenwart eines Elastomeren pfropfcopolymerisiert wird.

Bei diesem Verfahren können zur Pfropfcopolymerisation unvernetzte oder wenigstens partiell vernetzte Kautschuke eingesetzt werden; wenn man unvernetzte Kautschuke einsetzt, so kann die Pfropfcopolymerisation so durchgeführt werden, daß während der Pfropfung auch eine Vernetzung Kautschuke in gewünschtem Maß stattfindet.

Die Pfropfung kann bei Temperaturen von 20°C bis 170°C, vorzugsweise von 50°C bis 100°C, durchgeführt werden. Das Verfahren läßt sich in Masse, in Lösung, in Dispersion oder Suspension durchführen. Bevorzugt ist die Dispersions-, Fällungs- und Suspensionspolymerisation; ein besonders bevorzugtes Verfahren stellt die Emulsionspolymerisation dar. Die Polymerisationsverfahren lassen sich in organischen Medien oder in wäßrigen Medien durchführen. Wird die bevorzugte Emulsionspolymerisation zur Herstellung der erfindungsgemäßen Pfropfcopolymerisate durchgeführt, so arbeitet man vorteilhaft unter Vorlage einer Emulsion eines Kautschuks, dessen Emulsionsteilchengröße im Sinne der Erfindung liegt, andererseits können auch die Kautschukteilchen vor oder nach der Pfropfcopolymerisation durch bekannte Agglomerisationsverfahren zu einer gewünschten Teilchengröße vergrößert werden.

Die Pfropfung wird radikalisch durchgeführt; das kann durch die Mitverwendung von radikalerzeugenden Initiatoren wie Peroxiden, Azoverbindungen, Hydroperoxiden oder Perestern durchgeführt werden. Weiterhin lassen sich sogenannte Regler mitverwenden wie z.B. Mercaptane. Bei der Dispersions- oder Suspensionspolymerisation werden üblicherweise Hilfsstoffe wie bekannte Dispergier-, Suspendiermittel oder Emulgatoren verwendet. Arbeitet man bei der Pfropfung in Medien, so sollte bei pH-Werten von 12 bis 2 pfropfcopolymerisiert werden.

Die Polymerisationsverfahren können batchweise, diskontinuierlich oder vollkontinuierlich durchgeführt werden.

Dabei werden die Monomeren (I), gegebenenfalls in Mischung mit anderen Monomeren, radikalisch in Gegenwart der elastomeren Pfropfgrundlage pfropfcopolymerisiert. Dabei wird wenigstens ein teil der Monomeren auf das Elastomer gepfropft. Diese Pfropfung ist mengenmäßig in weiten Bereichen der Pfropfausbeute oder des Pfropfgrades bestimmt. Unter den erfindungsgemäßen Pfropfpolymerisaten werden daher Produkte verstanden, die Pfropfcopolymere und Homo- oder Copolymerisate der aufzupfropfenden Monomeren enthalten.

Nach der Pfropfpolymerisation lassen sich die Polymerisate nach herkömmlichen Verfahren aufarbeiten, wie z.B. durch Filtration, Koagulation, Sprühtrocknung und Ausdampfen. Insbesonders geeignet ist eine Aufarbeitung bei pH-Werten von <7. Eine derartige Aufarbeitungskontrolle erübrigt sich, wenn bereits die Pfropfung bei pH-Werten <7, vorzugsweise 4 bis 6, eingestellt werden. Vor weiterer Verarbeitung können den Pfropfpolymerisaten Füllstoffe, Stabilisatoren, Weichmacher, Pigmente, Antioxidanzien zugeführt werden, je nachdem, für welche technische Anwendung die Polymerisate vorgesehen sind.

Ein weiterer Gegenstand der Erfindung ist die Verwendung der erfindungsgemäßen Pfropfpolymerisate zur Herstellung thermoplastischer Polyamidformmassen.

Solche Formmassen zeichnen sich in Abhängigkeit vom Modifikatorgehalt durch eine überraschend gutes Zähbruchverhalten bei tiefen Temperaturen aus; ein Rückgang der Zähigkeitseigenschaften tritt erst unterhalb einer Temperatur von −40°C auf.

Gegenüber bereits bekannten Formmassen aus Polyamiden und Pfropfcopolymerisaten mit eingebauten Urethangruppen, aber aus unterschiedlicher chemischer Struktur als die Monomeren der Formel (I), besitzen die erfindungsgemäßen Formmassen verbessertes Fließverhalten und erhöhte Thermostabilität bei der Verarbeitung. Ein weiterer Gegenstand der Erfindung sind somit thermoplastische Polyamidformmassen aus:

A. 65 bis 97, vorzugsweise 70 bis 95, besonders bevorzugt aus 75 bis 80 Gew.-%, bezogen auf die Komponenten A und B, wenigstens eines Polyamids und aus

B. 3 bis 35, vorzugsweise 5 bis 30, besonders bevorzugt 10 bis 25 Gew.-%, bezogen auf die Komponenten A und B, eines vorgehend beschriebenen erfindungsgemäßen teilchenförmigen Pfropfcopolymerisates.

Als Polyamide A eignen sich alle thermoplastischen Polyamide, vorzugsweise teilkristalline Polyamide. So können als teilkristalline Polyamide für die erfindungsgemäßen Formmassen, Polyamid 6, Polyamid 66 oder deren Copolyamide eingesetzt werden. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylenhexamethylendiamin und/oder 2,4,4-Trimethylhexamethylendiamin und/oder Isophorondiamin besteht.

Außerdem sind Polyamide geeignet, die teilweise aus Lactamen mit 6 bis 10 C-Atomen und unter Mitverwendung einer oder mehrerer der obengenannten Ausgangskomponenten hergestellt worden sind.

Besonders bevorzugte teilkristalline Polyamide sind Polyamid 6 und Polyamid 66 oder Mischungen daraus.

Die thermoplastischen Polyamide sollen vorzugsweise eine relative Viskosität (gemessen an einer 1 Gew.-%igen Lösung in m-Kresol bei 25°C) von 2,0 bis 5,0, bevorzugt von 2,5 bis 4,0 aufweisen.

Die erfindungsgemäßen Polyamidformmassen können übliche Additive, wie Gleit- und Entformungsmittel, Nukleierungsmittel, Stabilisatoren, Füll- und Verstärkungsstoffe, Flammschutzmittel, Konservierungsstoffe sowie Farbstoffe enthalten.

Die gefüllten bzw. verstärken Formmassen können bis zu 60 Gew.-%, bezogen auf die verstärkten Formmassen, Füll- und/oder Verstärkungsstoffe, enthalten. Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Die mit Flammschutzmitteln ausgerüsteten Formmassen können diese Additive in einer Konzentration von im allgemeinen weniger als 30 Gew.-%, bezogen auf die flammgeschützten Formmassen enthalten und eine ausreichende Flammfestigkeit aufweisen.

Es kommen alle bekannten Flammschutzmittel in Frage, wie z.B. Melamin und dessen Salze, wie Melamincyanurat oder Melaminsulfat, oder roter Phosphor.

Die Herstellung der Formmassen kann in üblichen Mischaggregaten, wie Walzen, Knetern, Ein- und Mehrwellenextrudern, erfolgen.

Wenn auch in den meisten Fällen sämtliche Komponenten zweckmäßigerweise in einem Schritt gemischt werden, so kann es für manche Verfahrensabläufe empfehlenswert sein, die Komponenten erst nacheinander zu mischen.

So können die erfindungsgemäßen Formmassen auf den genannten Mischaggregaten hergestellt werden, indem die beiden Komponenten A und B gemeinsam aufgeschmolzen und homogenisiert werden oder indem das Pfropfpolymerisat B in die Schemlze des Polyamids A eingearbeitet wird.

Die Temperatur bei der Herstellung der Mischungen sollte mindestens 10°C und zweckmäßig höchstens 80°C oberhalb des Schmelzpunktes des Polyamids liegen.

Die erfindungsgemäßen Formmassen zeichnen sich durch eine ausgezeichnete Zähigkeit und ein sehr gutes Fließverhalten aus.

Vor allem wegen dieser Eigenschaften eignen sich die erfindungsgemäßen Formmassen zur Herstellung von Spritzguß- und Extrusionsformkörper, von allem im Kfz-Bereich für Stoßfänger, Karosserieteile.

## Beispiele

A. Verwendete Komponenten/Erfindungsgemäße Pfropfpolymerisate

I. Polyamid-6 mit einer relativen Viskosität (gemessen an einer 1 gew.-%igen Lösung in m-Kresol bei 25°C) von 3,0.

II. Polyamid-66 mit einer relativen Viskosität von 3,0, gemessen wie bei I.

III. Polyamid aus Insophthalsäure und Hexamethylendiamin ($\eta_{rel}$ 2,68 gemessen wie bei I).

IV. Pfropfcopolymerisate:

IV.1. Pfroptgrundlagen:

IV.1.1 Polybutadien mit einer mittleren Teilchengröße von 0,4 µm ($d_{50}$-Wert) und einem Gelgehalt von 87 Gew.-% in Form einer wäßrigen Emulsion mit einem Polymerfeststoffgehalt von 49 Gew.-%.

IV.1.2 Polybutylacrylat mit einer mittleren Teilchengröße von 0,45 µm ($d_{50}$-Wert) und einem Gelgehalt von 85 Gew.-% (der Gelgehalt wurde durch Copolymerisation mit Triallylcyanurat als vernetzendes Comonomer eingestellt). Der Kautschuk liegt in Form einer wäßrigen Emulsion mit einem Polymerfeststoffgehalt von 37 Gew.-% vor.

IV.1.3 Ethylen-Vinylacetat-Copolymer mit einem Vinylacetatgehalt von 30 Gew.-%, das Polymer ist löslich in organischen Flüssigkeiten und besitzt keinen Gelgehalt. Das Polymer liegt in Form einer wäßrigem Emulsion vor; die Emulsion besitzt einen Feststoffgehalt von 37 Gew.-%.

IV.2 Monomere zur Pfropfung:
Als Monomere werden folgende Verbindungen eingesetzt:

N-Vinyl-methylurethan (A) (Vergleich)

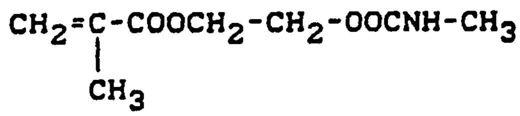
(B)

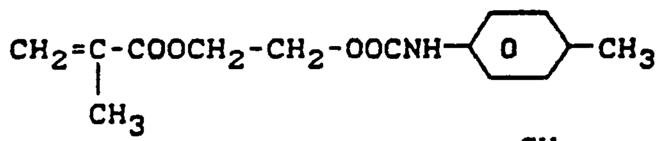
(C)

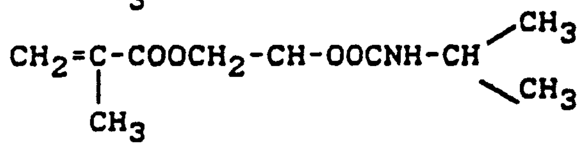
(D)

Beispiele 1—10

In einem Reaktor werden 2416 Gew.-Teile des Kautschuklatex IV.1.1 und 850 Gew.-Teile Wasser vorgelegt. Nach Aufheizen aus 65°C wird die Polymerisation durch Zusatz von 3,4 Gew.-Teilen Kaliumperoxidisulfat, gelöst in 100 Gew.-Teilen Wasser, gestartet.

Im Anschluß daran werden folgende Mengenströme innerhalb von 4 Stunden bei 65°C gleichmäßig in den Reaktor eindosiert.

Monomere: 300 Gew.-Teile
Emulgator: 410 Gew.-Teile Wasser
22 Gew.-Teile Na-Salz der disproportionierten Abietinsäure
22 Gew.-Teile in-Natronlauge

TABELLE 1
Pfropfpolymerisate

| Beispiel | Gew.-Teile Monomere |
|---|---|
| IV.1 | 300 Methylmethacrylat (Vergleich) |
| IV.2 | 293 Methylmethacrylat (Vergleich)<br>7 A |
| IV.3 | 293 Methylmethacrylat<br>7 B |
| IV.4 | 293 Methylmethacrylat<br>7 C |
| IV.5 | 293 Methylmethacrylat<br>7 D |
| IV.6 | 216 Styrol<br>84 Acrylnitril (Vergleich) |
| IV.7 | 211 Styrol<br>82 Acrylnitril (Vergleich)<br>7 A |
| IV.8 | 211 Styrol<br>82 Acrylnitril<br>7 D |
| IV.9 | 291 Methylmethacrylat<br>9 B |
| IV.10 | 285 Methylmethacrylat<br>15 B |

Nach Zudosierung der in der Tabelle 1 aufgeführten Monomeren wird noch 4 Stunden bie 65°C nachgeheizt. Anschließend stabilisiert man die Emulsion mit 1,6 Gew.-Teilen, bezogen auf 100 Gew.-Teile Pfropfpolymerisat, phenolischer Antioxidantien. Zur Aufarbeitung zu Pulvern werden die Emulsionen mittels $MgSO_4$/Essigsäure-Mischung bei pH-Wert von 4 bis 5 koaguliert, gewaschen und getrocknet.

Beispiele 11—13

In einem Reaktor werden 5797 Gew.-Teile des Kautschuklatex I.1.2 und 1000 Gew.-Teile Wasser vorgelegt. Nach Aufheizen auf 70°C wird die Polymerisation durch Zusatz won 4 Gew.-Teilen Kaliumperoxidisulfat, gelöst in 240 Gew.-Teilen Wasser, initiiert. Im Anschluß daran werden folgende Mengenströme innerhalb von 5 Stunden bei 70°C gleichmäßig in den Reaktor eindosiert.

Monomere: 920 Gew.-Teile
Emulgator: 792 Gew.-Teile Wasser
14 Gew.-Teile Na-Salz von $C_{16-18}$-Alkylsulfonaten

TABELLE 2
Pfropfpolymerisate

| Beispiele | Gew.-Teile Monomere |
|---|---|
| IV.11 | 920 Methylmethacrylat (Vergleich) |
| IV.12 | 901 Methylmethacrylat<br>19 B |
| IV.13 | 893 Methylmethacrylat<br>27 B |

Nach Zudosierung der in der Tabelle 2 genannten Monomeren wird noch 4 Stunden bie 70°C nachgeheizt. Anschließend stabilisiert man die Emulsion mit 1 Gew.-Teil, bezogen auf 100 Gew.-Teile Pfropfpolymerisat, phenolischer Antioxidantien. Zur Aufarbeitung zu Pulvern werden die Emulsionen mittels $MgSO_4$ bei pH-Werten um 5 koaguliert, gewaschen und getrocknet.

Beispiele 14—15

In einem Reaktor werden 5799 Gew.-Teile des Kautschuklatex IV.1.3 und 1000 Gew.-Teile Wasser vorgelegt. Nach Aufheizen auf 80°C wird die Polymerisation durch Zusatz won 4 Gew.-Teilen Azoisobuttersäurenitril und 1 g Lauroylperoxid, gelöst in 10 Gew.-Teilen der Monomerkombinationen nach Tabelle 3, gestartet. Im Anschluß daran wird folgender Mengenstrom innerhalb von 5 Stunden bei 70 bis 80°C gleichmäßig in den Reaktor eindosiert.

Monomer: 920 Gew.-Teile
4 Gew.-Teile Azoisobuttersäurenitril

TABELLE 3
Pfropfpolymerisate

| Beispiele | Gew.-Teile Monomere |
|---|---|
| IV.14 | 901 Methylmethacrylat<br>19 B |
| IV.15 | 901 Methylmethacrylat<br>19 C |

Nach Zudosierung wird 6 Stunden bei 80°C nachgerührt. Anschließend koaguliert man bei pH-Werten von 7 mit $NaCl/CaCl_2$-Gemisch, filtriert, säubert durch Waschen mit Wasser trocknet.

Die erfindungsgemäßen Pfropfpolymerisate lassen sich zu den Vergleichsprodukten, besonders gut aus wäßrigen Emulsionen isolieren; bei der Trocknung und Entwässerung durch technische Aggregate weisen sie außerdem ein verbessertes Entwässerungsverhalten auf. Besonders vorteilhaft ist ihr Einsatz in Abmischung mit Polyamiden.

B. Herstellung und Prüfung der Polyamidformmassen

Beispiele 16—28

Auf einen kontinuierlich arbeitenden Doppelwellenextruder wurden die Komponenten aufgeschmolzen und homogenisiert. Die Zylindertemperaturen wurden so gewählt, daß die in der Tabelle 4 angegebenen Massetemperaturen eingehalten wurden. Der Schmelzstrang wurde vor dem Austritt aus der Düse entgast, in Wasser abgekühlt, granuliert und getrocknet.

Von den Formmassen wurden auf einer Spritzgußmaschine ASTM-Stäbe hergestellt. Geprüft wurde die Kerbschlagzähigkeit nach Izod bei verschiedenen Temperaturen und daraus der Spröd/Zäh-Übergang ermittelt. Weiterhin wurde die Fließlänge bestimmt.

Tabelle 4: Zusammensetzung und Eigenschaften der Formmassen

| Beispiele | Komponente I/II/III Polyamid Typ | Gew.-% | IV Pfropfprodukt nach Beispiel | Gew.-% | Spröd/Zäh-Übergang (°C) | Fließspirale (cm) |
|---|---|---|---|---|---|---|
| 16[1] | I | 75 | IV.1 | 25 | -30 | 25 |
| 17[1] | I | 75 | IV.2 | 25 | -55 | 33 |
| 18 | I | 75 | IV.3 | 25 | -55 | 35 |
| 19 | I | 75 | IV.4 | 25 | -50 | 35 |
| 20 | I | 75 | IV.5 | 25 | -55 | 34 |
| 21[1] | II | 70 | IV.1 | 30 | -20 | 35 |
| 22 | II | 70 | IV.5 | 30 | -40 | 39 |
| 23[2][1] | III | 80 | IV.6 | 20 | -30 | 26 |
| 24[2][1] | III | 80 | IV.7 | 20 | -40 | 28 |
| 25[2] | III | 80 | IV.8 | 20 | -45 | 33 |
| 26[1] | I | 80 | IV.11 | 20 | +10 | 35 |
| 27 | I | 80 | IV.12 | 20 | -20 | 40 |
| 28 | I | 80 | IV.13 | 20 | -20 | 40 |

1) Vergleichsbeispiele

2) Die Massetemperatur im Extruder und in der Spritzgießmaschine betrug 245° C. Die übrigen Massetemperaturen betrugen 280° C.

**Patentansprüche**

1. Pfropfpolymerisate hergestellt aus
1) einer Elastomerkomponente mit Glasübergangstemperaturen <0°C, als Pfropfgrundlage und
2) Pfropfmonomeren der allgemeinen Formel I

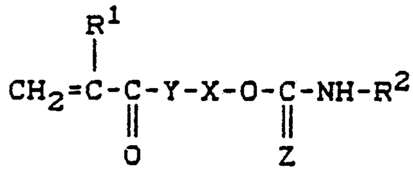

(I),

worin
$R^1$ für H oder einen $C_1$—$C_4$-Alkylrest,
$R^2$ für einen $C_1$—$C_{20}$-Alkyl- oder einen $C_6$—$C_{18}$-Arylrest, der gegebenenfalls mit Alkylgruppen oder O- oder N-haltigen Gruppen substituiert sein kann,
Y für eine —O— oder eine —NH-Gruppe,
X für einen $C_2$—$C_{10}$-Alkylenrest,
Z für O oder S, vorzugsweise O,
steht, und gegebenenfalls weiteren olefinisch ungesättigten Monomeren.

2. Pfropfpolymerisate nach Anspruch 1 hergestellt aus
8 bis 85 Gew.-% der Pfropfgrundlage 1) und
92 bis 15 Gew.-% aufzupfropfenden Monomeren 2), die aus 0,5 bis 100 Gew.-% aus Monomeren der Formel (I) und 0 bis 99,5 Gew.-% weiteren olefinisch ungesättigten Monomeren bestehen.

3. Pfropfpolymerisate nach Anspruch 1 oder 2, dadurch gekennzeichnet, daß sie aus 50 bis 75 Gew.-% der Pfropfgrundlage 1) und 50 bis 25 Gew.-% aufzupfropfenden Monomeren hergestellt wurden, die aus 0,5 bis 20 Gew.-% aus Monomeren der allgemeinen Formel (I) und 99,5 bis 80 Gew.-% weiteren olefinisch ungesättigten Monomeren bestehen.

4. Pfropfpolymerisate nach den Ansprüchen 1—3, dadurch gekennzeichent, daß als Pfropfmonomere der allgemeinen Formel (I) Additionsprodukte aus Hydroxylalkylestern von Acrylsäure oder Methacrylsäure und Monoisocyanaten vorzugsweise der allgemeinen Formeln

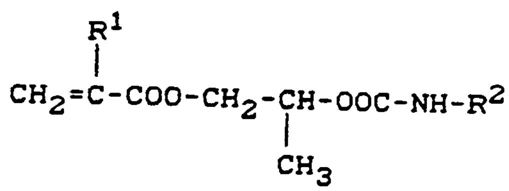

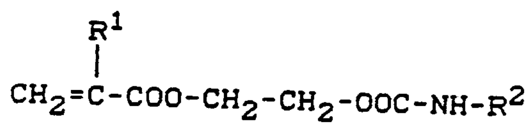

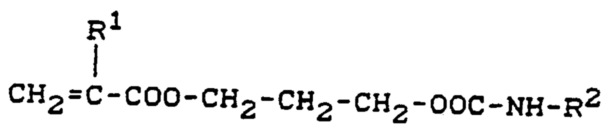

eingesetzt werden, in denen $R^1$ und $R^2$ die in Anspruch 1 angegebene Bedeutung haben, und als weitere olefinisch ungesättigte Monomere ein Vinyl- oder Vinylidenmonomeres, bevorzugt Styrol, α-Methylstyrol, p-Methylstyrol oder ein Halogenstyrol, Acrylnitril oder Methacrylnitril, ein Acrylsäurealkylester bis zu 12 C-Atomen in der Estergruppe sowie ein entsprechendes Methacrylat, Methacrylsäure, Acrylsäure, Acrylamid, Methacrylamid, Vinylacetat, Vinylpropionat, Propylen, Butadien, Chloropren, Vinylchlorid oder Maleinsäureanhydrid eingesetzt wird.

5. Pfropfpolymerisate nach den Ansprüchen 1—4, dadurch gekennzeichnet, daß als Pfropfmonomeres der allgemeinen Formel I ein Additionsprodukt aus einem Hydroxyalkylester von (Meth)-Acrylsäure und einem Alkyl-isocyanaten, bevorzugt Ethyl-, Propyl-, Cyclohexyl, Stearyl- oder tert.-Butylisocyanat eingesetzt wird.

9. Pfropfpolymerisate nach den Ansprüchen 1—5, dadurch gekennzeichnet, daß als Pfropfgrundlage ein Elastomeres mit Glasübergangstemperaturen <−20°C eingesetzt wird.

7. Pfropfpolymerisate nach den Ansprüchen 1—6, dadurch gekennzeichnet, daß als Pfropfgrundlage ein Polybutadien, Polychloropren, Polyisopren, ein Ethylenpolymeres, Ethylen-Vinylacetatcopolymeres,

Ethylen-Acrylat-Copolymeres, ein EPDM-Kautschuk, ein Silikonkautschuk oder Acrylatkautschuk eingesetzt wird.

8. Pfropfpolymerisate nach den Ansprüchen 1—7, dadurch gekennzeichnet, daß als Pfropfgrundlage ein Polybutadien oder ein Butadien-Copolymerisat mit Teilchengrößen von 0,09 bis 0,6 µm und einem Gelgehalt >50 Gew.-% oder ein Alkylacrylatkautschuk mit Teilchengrößen von 0,09 bis 0,6 µm und einem Gelgehalt >80 Gew.-%, und einer sogenannten Kern-Mantel-Struktur eingesetzt wird.

9. Pfropfpolymerisate nach den Ansprüchen 1—8, dadurch gekennzeichnet, daß sie eine Teilchengröße ($d_{50}$) von 0,05—8 µm aufweisen.

10. Verwendung der teilchenförmigen Pfropfpolymerisate nach den Ansprüchen 1—9 zur Herstellung thermoplastischer Formmassen aus

A) 65 bis 97 Gew.-% Polyamid und

B) 3 bis 35 Gew.-% des teilchenförmigen Pfropfpolymerisats.

11. Verwendung nach Anspruch 10 zer Herstellung thermoplastischer Formmassen aus

A) 70 bis 95 Gew.-% Polyamid und

B) 5—30 Gew.-% des teilchenförmigen Pfropfpolymerisats.

**Revendications**

1. Polymérisats greffés, produits à partir

1) d'un composant élastomérique ayant des températures de transition vitreuse inférieures à 0°C comme substrat de greffage et

2) de monomères à greffer de formule générale I

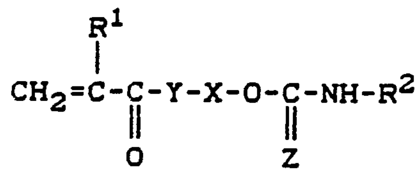

(I),

dans laquelle

$R^1$ représente H ou un reste alkyle en $C_1$ à $C_4$,

$R^2$ est un reste alkyle en $C_1$ à $C_{20}$ ou un reste aryle en $C_6$ à $C_{18}$ qui peut être substitué le cas échéant avec des groupes alkyle ou des groupes contenant de l'oxygène ou de l'azote,

Y représente —O— ou un groupe —NH—,

X représente un reste alkylène en $C_2$ à $C_{10}$,

Z représente O ou S, de préférence O, et le cas échéant d'autres monomères à non-saturation oléfinique.

2. Polymérisats greffés suivant la revendication 1, produits à partir

de 8 à 85% en poids du substrat de greffage 1) et

de 92 à 15% en poids de monomères 2) à greffer, qui sont constitués de 0,5 à 100% en poids de monomères de formule (I) et

de 0 à 99,5% en poids d'autres monomères à non-saturation oléfinique.

3. Polymérisats greffés suivant la revendication 1 ou 2, caractérisés en ce qu'ils ont été produits à partir de 50 à 75% en poids du substrat de greffage 1) et

de 50 à 25% en poids du monomères à greffer, qui consistent en 0,5 à 20% en poids de monomères de formule générale (I) et en 99,5 à 80% en poids d'autres monomères à non-saturation oléfinique.

4. Polymérisats greffés suivant les revendications 1 à 3, caractérisés en ce qu'on utilise comme monomères à greffer de formule générale (I) des produits d'addition d'esters d'hydroxyalkyle d'acide acrylique ou d'acide méthacrylique et de mono-isocyanates, répondant de préférence formules générales

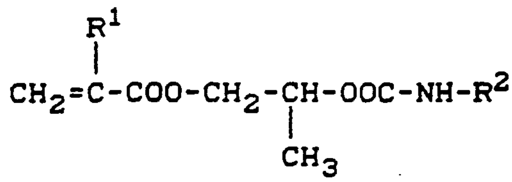

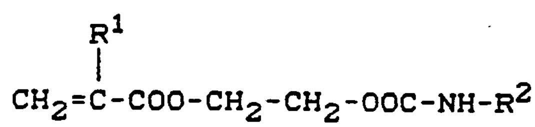

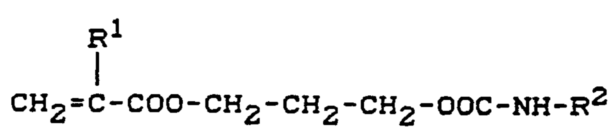

dans lesquelles $R^1$ et $R^2$ ont la définition indiquée dans la revendication 1, et on utilise comme autres monomères à non-saturation oléfinique un monomère vinylique ou vinylidénique, de préférence le styrène, 1'α-méthylstyrène, le p-méthylstyrène ou un halogénostyrène, l'acrylonitrile ou le méthacrylonitrile, un ester alkylique d'acide acrylique ayant jusqu'à 12 atomes de carbone dans le groupe ester ainsi qu'un méthacrylate correspondant, l'acide méthacrylique, l'acide acrylique, l'acrylamide, le méthacrylamide, l'acétate de vinyle, le propionate de vinyle, le propylène, le butadiène, le chloroprène, le chlorure de vinyle ou l'anhydride d'acide maléique.

5. Polymérisats greffés suivant les revendications 1 à 4, caractérisés en ce qu'on utilise comme monomère à greffer de formule générale (I) un produit d'addition d'un ester hydroxyalkylique d'acide (méth)acrylique et d'un alkylisocyanate, de préférence l'isocyanate d'éthyle, de propyle, de cyclohexyle, de stéaryle ou de tertio-butyle.

6. Polymérisats greffés suivant les revendications 1 à 5, caractérisés en ce qu'on utilise comme substrats de greffage un élastomère ayant des températures de transistion vitreuse inférieures à −20°C.

7. Polymérisats greffés suivant les revendications 1 à 6, caractérisés en ce qu'on utilise comme substrats de greffage un polybutadiène, un polychloroprène, un polyisoprène, un polymère, d'éthylène, un copolymère d'éthylène et d'acétate de vinyle, un copolymére d'éthylène et d'acrylate, un caoutchouc EPDM, un caoutchouc de silicone ou un caoutchouc d'acrylate.

8. Polymérisats greffés suivant les revendications 1 à 7, caractérisés en ce qu'on utilise comme substrats de greffage un polybutadiène ou un copolymérisat de butadiène ayant des diamètres de particules de 0,09 à 0,6 µm et une teneur en gel supérieure à 50% en poids ou un caoutchouc d'acrylate d'alkyle ayant des diamètres de particules de 0,09 à 0,6 µm et une teneur en gel supérieure à 80% en poids, et à structure dite à noyau et enveloppe.

9. Polymérisats greffés suivant les revendications 1 à 8, caractérisés en ce qu'ils présentent un diamètre ($d_{50}$) des particules de 0,05 à 8 µm.

10. Utilisation des polymérisats greffés en particules suivant les revendications 1 à 9 pour la production de matières à mouler thermoplastiques à partir de

A) 65 à 97% en poids de polyamide et

B) 3 à 35% en poids du polymérisat greffé en particules.

11. Utilisation suivant la revendication 10 pour la production de matières à mouler thermoplastiques à partir de

A) 70 à 95% en poids de polyamide et

B) 5 à 30% en poids du polymérisat greffé en particules.

## Claims

1. Graft polymers produced from

1) an elastomer component having glass transition temperatures below 0°C as the graft base and

2) graft monomers corresponding to general formula 2

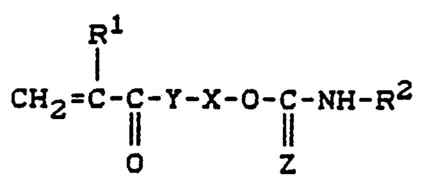

(I),

in which

$R^1$ represents H or a $C_{1-4}$ alkyl radical,

$R^2$ represents a $C_{1-20}$ alkyl or a $C_{6-18}$ aryl radical which may optionally be substituted by alkyl groups or by O- or N-containing groups,

Y represents an —O— or —NH— group,

X represents a $C_{2-20}$ alkylene radical,

Z represents O or S, preferably O, and optionally other olefinically unsaturated monomers.

2. Graft polymers as claimed in claim 1 produced from 8 to 85% by weight of the graft base 1) and 92 to −15% by weight monomers 2) to be grafted on which consist of

0.5 to 100% by weight monomers corresponding to formula (I) and

0 to 99.5% by weight other olefinically unsaturated monomers.

3. Graft polymers as claimed in claim 1 or 2, characterized in that they are produced from 50 to 75% by weight of the graft base 1) and 50 to 25% by weight monomers to be grafted on which consist of

0.5 to 20% by weight monomers corresponding to general formula (I) and 99.5 to 80% by weight other olefinically unsaturated monomers.

4. Graft polymers as claimed in claims 1 to 3, characterized in that adducts of hydroxyalkyl esters of acrylic acid or methacrylic acid and monoisocyanates preferably corresponding to the following general formulae

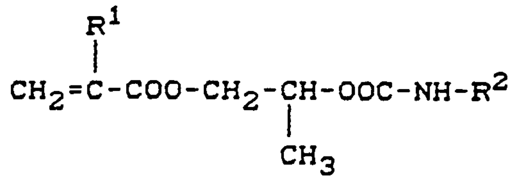

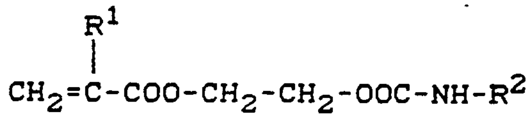

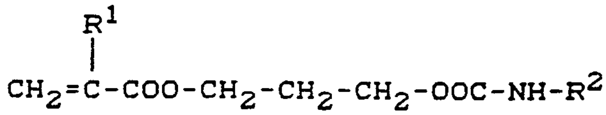

in which $R^1$ and $R^2$ are as defined in claim 1, are used as the graft monomers of general formula (I) and a vinyl or vinylidene monomer, preferably styrene, α-methyl styrene, p-methyl styrene or a halostyrene, acrylonitrile or methacrylonitrile, an alkyl acrylate containing up to 12 C atoms in the ester group and a corresponding methacrylate, methyacrylic acid, acrylic acid, acrylamide, methacrylamide, vinyl acetate, vinyl propionate, propylene, butadiene, chloroprene, vinyl chloride or maleic anhydride is used as a further olefinically unsaturated monomer.

5. Graft polymers as claimed in claims 1 to 4, characterized in that an adduct of a hydroxyalkyl ester of (meth)acrylic acid and an alkyl isocyanate, preferably ethyl, propyl, cyclohexyl, stearyl or tert.-butyl isocyanate, is used as the graft monomer of general formula I.

6. Graft polymers as claimed in claims 1 to 5, characterized in that an elastomer having glass transition temperatures below −20°C is used as the graft base.

7. Graft polymers as claimed in claims 1 to 6, characterized in that a polybutadiene, polychloroprene, an ethylene polymer, ethylene/vinyl acetate copolmer, ethylene/acrylate copolymer, an EPDM rubber, a silicone rubber or acrylate rubber is used as the graft base.

8. Graft polymers as claimed in claims 1 to 7, characterized in that a polybutadiene or a butadiene copolymer having particle sizes of 0.09 to 0.6 µm and a gel content of more than 50% by weight or an alkyl acrylate rubber having particle sizes of 0.09 to 0.6 µm and a gel content of more than 80% by weight and a so-called core-shell structure is used as the graft base.

9. Graft polymers as claimed in claims 1 to 8, characterized in that they have a particle size ($d_{50}$) of 0.05 to 8 µm.

10. The use of the particulate graft polymers claimed in claims 1 to 9 for the production of thermoplastic moulding comounds of

A) 65 to 97% by weight polyamide and

B) 3 to 35% by weight of the particulate graft polymer.

11. The use claimed in claim 10 for the production of thermoplastic moulding compounds of

A) 70 to 95% by weight polyamide and

B) 5 to 30% by weight of the particulate graft polymer.